# EUROPÄISCHE PATENTSCHRIFT

(11) **EP 4 304 796 B1**
(45) Veröffentlichungstag und Bekanntmachung des Hinweises auf die Patenterteilung: **31.12.2025**
(21) Anmeldenummer: 22719852.0
(22) Anmeldetag: 30.03.2022
(51) Int. Cl.: B22F 10/22, B22F 12/53, B22F 12/57, B05B 1/08, B29C 64/209, B33Y 10/00, B33Y 30/00, B29C 64/321

(54) **DRUCKKOPF UND VERFAHREN ZUR ADDITIVEN FERTIGUNG EINES BAUTEILS MITTELS METALLSCHMELZE**
PRINT HEAD AND METHOD FOR ADDITIVELY MANUFACTURING A COMPONENT BY MEANS OF MOLTEN METAL
TÊTE D'IMPRESSION ET PROCÉDÉ PERMETTANT DE FABRIQUER DE MANIÈRE ADDITIVE UN COMPOSANT AU MOYEN D'UN MÉTAL EN FUSION

(30) Priorität: 28.06.2021 DE 102021116623
(43) Veröffentlichungstag der Anmeldung: 17.01.2024
(73) Patentinhaber: Grob-Werke GmbH & Co. KG, 87719 Mindelheim (DE)
(72) Erfinder: GLASSCHRÖDER, Johannes, 86356 Neusäß (DE); LEUSCH, Oliver, 86159 Augsburg (DE); MIKLEC, Christian, 86825 Bad Wörishofen (DE); HIMMEL, Benjamin, 81249 München (DE); LANG, Andreas, 86833 Ettringen (DE); OTTER, Martin, 87700 Memmingen (DE)
(74) Vertreter: Kramer Barske Schmidtchen Patentanwälte PartG mbB
(86) Internationale Anmeldenummer: PCT/EP2022/058433
(87) Internationale Veröffentlichungsnummer: WO 2023/274590

(56) Entgegenhaltungen:
- WO-A1-2018/167209
- WO-A1-2020/169260
- DE-A1- 102017 221 162
- DE-A1- 102017 221 949
- DE-A1- 102018 216 932

## Beschreibung

Die vorliegende Offenbarung betrifft einen Druckkopf für das Drucken von flüssiger Metallschmelze zur additiven Fertigung eines Bauteils und ein Verfahren zum Betreiben eines solchen Druckkopfs zur additiven Fertigung eines Bauteils mittels Metallschmelze. Insbesondere ist der Druckkopf und das Verfahren für den Einsatz in der additiven Fertigungstechnologie Liquid Metal Printing (LMP) vorgesehen.

Im Stand der Technik bekannte Druckköpfe weisen einen Kolben auf, mittels dessen das zu druckende Material aus einer Düse ausgestoßen wird. Der Kolben wird hier bevorzugt mittels eines Piezoaktuators in der Ausstoßrichtung zu einer Düsenaustrittsöffnung hin bewegt, wodurch beim Ausstoßen des Materials ein Tropfen erzeugt wird. Anschließend wird der Kolben mit einer Feder in seine Ruhelage zurückgestellt, wobei in der Rückbewegung neues Material aus einem Reservoir in den Kolbenkanal nachfließt und das zuvor abgegebene Material kompensiert. Ein solcher Druckkopf ist beispielsweise bekannt aus der WO2020/120317 A1.

Bei herkömmlichen Druckköpfen kann es mit der Aktuierung und insbesondere mit dem Nachfließen des Druckmaterials zu einer Dynamik in dem Kolbenkanal kommen, die zu einer Schwingung des Druckmaterials führt, insbesondere kann eine Schwingung des Flüssigkeitsmeniskus am Düsenaustritt induziert werden. Solche Schwingungen können, insbesondere wenn sie sich überlagern, zu Qualitätsverlusten beim Drucken durch beispielsweise ungewollte Tropfenerzeugung oder Tropfenerzeugung in nicht definierter Größe etc. führen.

Zur Vermeidung oder Verringerung der Schwingungen können beispielsweise verschiedenste Druckparameter (Kolbengeschwindigkeit, Amplitude oder Abklingzeit (Verweildauer in Ruhestellung)) oder Geometrien angepasst werden, jedoch führen die Mehrzahl der Maßnahmen zu verschiedenen anderen nachteiligen Effekten, wie beispielsweise Verringerung der maximal möglichen Tropfenabgabefrequenz oder Probleme bei der Erzeugung von definierten Tropfen (Tropfen mit vorbestimmter Größe).

In der WO 2020/169260 A1 wird zur Verbesserung der Tropfenerzeugung ein sogenanntes inverses Aktuierungsverfahren eines herkömmlichen Druckkopfs beschrieben. Bei dieser inversen Aktuierung wird der Kolben in einem ersten Schritt zum Laden des Kolbenkanals ausgehend von einer Ruhestellung von der Düsenaustrittsöffnung weg und anschließend in einem zweiten Schritt wieder zurück in seine Ruhestellung oder darüber hinaus in Richtung der Düsenaustrittöffnung bewegt. Die Ladung des Kolbenkanals erfolgt also immer aus der Ruhestellung heraus und unmittelbar vor der Erzeugung des Tropfens, wodurch Schwingungen verringert bzw. vermieden werden können. Der zur Aktuierung des Kolbens vorgesehene Piezo ist bei diesem Aktuierungsverfahren entsprechend in der Ruhestellung des Kolbens mindestens teilweise geladen, wird dann in dem ersten Schritt entladen und in dem zweiten Schritt wieder geladen.

Aufgabe der vorliegenden Offenbarung ist es, einen verbesserten Druckkopf für das Drucken von flüssiger Metallschmelze zur additiven Fertigung eines Bauteils anzugeben, mit dem eine hohe Qualität der Tropfenerzeugung bei hoher Geschwindigkeit und guter Haltbarkeit des Druckkopfs erreicht werden kann. Weitere Aufgabe ist es, ein entsprechendes Verfahren zum Betreiben eines solchen Druckkopfs anzugeben.

Die erste Aufgabe wird gelöst durch einen Druckkopf nach Anspruch 1. Die weitere Aufgabe wird gelöst durch ein Verfahren nach Anspruch 13. Weiterbildungen sind in den abhängigen Ansprüchen angegeben.

Der Druckkopf ist für das Drucken von flüssiger Metallschmelze zur additiven Fertigung eines Bauteils vorgesehen, kann aber in anderen Ausführungsformen, die nicht von dem Schutzbereich des derzeitigen Anspruchs 1 abgedeckt sind, auch für das Drucken in der nicht additiven Fertigung oder für das Drucken anderer flüssiger Materialien wie beispielsweise Kunststoffe sowohl in der additiven als auch nicht additiven Fertigung vorgesehen sein.

Das Düsenbauteil ist bevorzugt austauschbar vorgesehen. Alternativ kann das Düsenbauteil beispielsweise integral mit einem anderen Bauteil, wie beispielsweise dem Tiegel oder einem Kolbenführungsbauteil zum Führen des Kolbens ausgebildet sein. Das Düsenbauteil ist bevorzugt eine Düsenplatte, in der das Düsenbauteildurchgangsloch bevorzugt im Wesentlichen senkrecht zur flächigen Erstreckung der Düsenplatte vorgesehen ist. Das Düsenbauteil ist bevorzugt an dem Kolbenführungsbauteil bevorzugt austauschbar gehalten.

Das Kolbenführungsbauteil ist, soweit es vorgesehen ist, bevorzugt austauschbar vorgesehen. Das Kolbenführungsbauteil ist bevorzugt in dem Bodenloch des Tiegels angebracht oder ausgebildet. Für den Fall, dass das Düsenbauteil das Kolbenführungsbauteil integral ausgebildet, ist das Düsenbauteil bevorzugt austauschbar vorgesehen, bevorzugt an dem Tiegel.

Der Kolbenkanal dient bevorzugt zum beweglichen Führen des der Düsenaustrittsöffnung zugewandten oder näheren ersten Kolbenendes. Bevorzugt wird der Kolbenkanal durch das Kolbenführungsbauteil ausgebildet. Alternativ kann der Kolbenkanal durch das Düsenbauteil alleine oder das Düsenbauteil und das Kolbenführungsbauteil zusammen ausgebildet sein. Die Düsenaustrittsöffnung hat bevorzugt einen kleineren Durchmesser als der Kolbenkanal.

Der Kolbenkanal bildet bevorzugt wenigstens teilweise einen Laderaum aus. Bevorzugt bildet mindestens der Teil des Kolbenkanals den Laderaum aus, der zwischen dem ersten Kolbenende in der eingezogenen Stellung und dem ersten Kolbenende in der ausgefahrenen Stellung des Kolbens ausgebildet wird. Der Laderaum entspricht also bevorzugt dem Hubraum des Kolbens auf der Seite des ersten Kolbenendes. Mit der Bewegung des Kolbens von der eingezogenen Stellung in die ausgefahrene Stellung wird bevorzugt das Volumen des Laderaums bevorzugt auf null verringert, so dass bei im Laderaum befindlichem Druckmaterial, bevorzugt Metallschmelze, dieses verdrängt wird. Bevorzugt ist der Laderaum unmittelbar angrenzend an das Düsenbauteildurchgangsloch ausgebildet, so dass das verdrängte Material und/oder in dem Düsenbauteildurchgangsloch vorhandenes Material unmittelbar als Tröpfchen aus der Düsenaustrittsöffnung abgegeben oder abgespritzt wird. Alternativ ist beispielsweise der zwischen dem Laderaum und der Düsenaustrittsöffnung ausgebildete gegebenenfalls weitere Verlauf des Kolbenkanals und/oder ein Innenraum des Düsenbauteildurchgangslochs mit Druckmaterial, bevorzugt der Metallschmelze gefüllt, so dass das Druckmaterial, bevorzugt die Metallschmelze, das sich in dem Düsenbauteildurchgangsloch vor der Düsenaustrittsöffnung befindet, durch den Verdrängungsimpuls auf das im Laderaum befindliche Material als Tröpfchen aus der Düsenaustrittsöffnung abgegeben oder abgespritzt wird. Alternativ kann der Laderaum auch als der Raum zwischen dem Kolben in der eingezogenen Stellung und der Düsenaustrittsöffnung definiert werden.

Die eingezogene Stellung entspricht bei einem Abspritzen nach unten in Richtung der Gewichtskraft der oberen Stellung des Kolbens, die ausgefahrene Stellung entsprechend der unteren Stellung. Die eingezogene Stellung und die ausgefahrene Stellung können nach Bedarf variiert werden, müssen also nicht der jeweils maximal anfahrbaren Stellung entsprechen. Hierdurch können entsprechend das Hubvolumen, der Abstand zur Düsenaustrittsöffnung in den jeweiligen Stellungen etc. eingestellt werden.

Die Aktuatorbaugruppe weist mindestens den Aktuator auf. Der Aktuator ist mindestens dazu ausgebildet, den Kolben aus seiner ausgefahrenen Stellung in seine eingezogene Stellung zu bewegen. Insbesondere ist der Aktuator bevorzugt derart ausgebildet, dass er den Kolben durch Zuführen von Energie oder Starten einer Energiezufuhr von seiner ausgefahrenen Stellung in seine eingezogene Stellung bewegen kann. Alternativ ist er derart ausgebildet, dass er den Kolben durch Erhöhen der Energiezufuhr von seiner ausgefahrenen Stellung in seine eingezogene Stellung bewegen kann. Optional kann er zusätzlich dazu ausgebildet sein, den Kolben aus seiner eingezogenen Stellung zurück in seine ausgefahrene Stellung zurück zu bewegen oder diese Bewegung zurück ggfs. durch weitere Energiezufuhr oder aktive Energieabfuhr zu unterstützen. Der Aktuator ist beispielsweise ein elektromotorischer Aktuator (Elektromotor, der den Kolben über einen Antriebsmechanismus (beispielsweise Zahnrad-Zahnstange) bewegt), ein elektromagnetischer Aktuator (Spule-Anker), ein pneumatischer oder hydraulischer Aktuator oder noch bevorzugter ein Piezoaktuator, hier bevorzugt ein Piezostapel oder ein Ringpiezo (Piezostapel der in Ringform ausgebildet ist). Die Funktion, Steuerung und Arbeitsweisen der einzelnen möglichen Aktuatoren erfolgen auf bekannte Weisen, so dass auf eine weitere diesbezügliche Erläuterung verzichtet wird. Der Aktuator ist ein Aktuator, der durch Zuführen von Energie (bei Betätigung) eine Kraft in Richtung weg von der Düsenaustrittsöffnung auf den Kolben ausüben kann.

In dem Fall, dass der Aktuator ein Piezoaktuator ist, ist dieser bevorzugt so ausgebildet, dass der Piezoaktuator ausgehend von einer ersten Länge zu einer zweiten Länge in der (seiner) Aktuationsrichtung (y) ausdehnbar ist, indem Energie zugeführt wird (bevorzugt durch Anlegen oder Erhöhen einer Spannung an dem Piezo). Weiterhin ist der Piezoaktuator bevorzugt so angeordnet und mit dem Kolben gekoppelt, dass der Kolben mit der Ausdehnung des Piezoaktuators von der ersten Länge zu der zweiten Länge von der ausgefahrenen in die eingezogene Stellung bewegt wird.

Das Vorspannelement ist beispielsweise als Feder (Spiralfeder, Tellerfeder, etc.), Gummifeder, Luftfeder, Gasdruckfeder, etc. ausgebildet. Das Vorspannelement kann als Druckfeder oder Zugfeder ausgebildet sein. Das Vorspannelement ist in Abhängigkeit von der Ausbildung des Aktuators beispielsweise so ausgebildet, dass es die Bewegung des Kolbens aus der eingezogenen in die ausgefahrene Stellung unterstützt. In einem solchen Fall liefert auch der Aktuator eine Kraft zum Bewegen des Kolbens aus der eingezogenen in die ausgefahrene Stellung. Bevorzugt ist das Vorspannelement in Abhängigkeit von der Ausbildung des Aktuators so ausgebildet, dass das Vorspannelement den Kolben nach Abschalten oder Verringern der Energiezufuhr zu dem Aktuator (nach dem Ende der Betätigung des Aktuators) zunächst abbremst und anschließend zum Bewegen des Kolbens von der ausgefahrenen Stellung in die eingezogene Stellung alleine in die ausgefahrene Stellung zurückbewegt. In diesem Fall wird die zum Abspritzen/Erzeugen eines Tropfens benötigte Energie einschließlich der zum Zurückbewegen des Aktuators notwendigen Energie/Reibung alleine oder ausschließlich von dem Vorspannelement geliefert. Das Vorspannelement ist bevorzugt so ausgebildet, dass es sowohl in der eingezogenen als auch der ausgefahrenen Stellung eine Vorspannkraft auf den Kolben oder den Aktuator oder die Kolbenaufhängung aufbringt.

In einer alternativen Ausgestaltung, die nicht von dem Schutzbereich des derzeitigen Anspruchs 1 abgedeckt ist, ist kein Vorspannelement vorgesehen. In einem solchen Fall kommt bevorzugt ein Aktuator zum Einsatz, der sowohl die Bewegung von der ausgefahrenen Stellung in eine eingezogene Stellung als auch die Zurückbewegung leistet. Bevorzugt ist ein solcher Aktuator ein Aktuator, der die Bewegung des Kolbens von der ausgefahrenen Stellung in eine eingezogene Stellung durch eine Vergrößerung seiner Länge in der Aktuationsrichtung erreicht, wie beispielsweise ein doppelt wirkender pneumatischer Aktuator. In einer solchen Ausgestaltung muss der Aktuator selbstverständlich an dem Gehäuse derart befestigt sein, dass sowohl Zug- als auch Druckkräfte auf den Kolben ausüben kann. Eine einfache Abstützung reicht hier nicht aus.

In einer bevorzugten Ausführungsform ist der Aktuator ein Piezoaktuator und wird die Kraft für die Rückbewegung des Kolbens durch das Vorspannelement alleine geleistet (die durch das Entladen des Piezos am Piezo selbst erzeugte Kraft sei hier vernachlässigt). In diesem Fall wird die am Piezoaktuator anliegende Spannung zur Realisierung der Zurückbewegung in die ausgefahrene Stellung abgeschaltet und der Piezo entladen. Alternativ hierzu kann die Zurückbewegung durch den Piezoaktuator unterstützt werden, indem mindestens kurzzeitig eine Spannung mit zu der ersten Spannung (Aufladespannung) entgegengesetztem Vorzeichen angelegt wird. Der Piezoaktuator wird also bevorzugt aktiv entladen und/oder mit entgegengesetzten Vorzeichen geladen, so dass er in seine Ausgangslage zurückkehrt und dabei das Vorspannelement unterstützen kann oder diesem zumindest nicht entgegenwirkt.

Das Füllen des Laderaums erfolgt bevorzugt in der Bewegung des Kolbens von der ausgefahrenen Stellung in die eingezogene Stellung durch das im Laderaum freiwerdende Volumen. Hierfür ist, wie im Stand der Technik bekannt, bevorzugt mindestens ein Füllkanal ausgebildet, über den in einem Vorratsreservoir vorgesehenes zu druckendes Material in den Laderaum zugeführt werden kann. Das zu druckende Material läuft beispielsweise entweder selbstständig mittels Schwerkraft nach oder ist mit Druck beaufschlagt oder wird mittels einer Fördereinheit (z.B. Pumpe) zugeführt. Der Füllkanal ist bevorzugt mindestens in der eingezogenen Stellung des Kolbens geöffnet, kann aber beispielsweise auch bereits in einem Bewegungsbereich des Kolbens vor der eingezogenen Stellung geöffnet sein. Beispielsweise wird das Vorratsreservoir durch den Tiegel ausgebildet und beispielsweise sind als Fluidkanal mehrere schlitzförmige Vertiefungen (Überströmungskanäle) in der Außenwand des Kolbenkanals derart vorgesehen, dass durch die schlitzförmigen Vertiefungen bei in der eingezogenen Stellung befindlichem Kolben eine Verbindung zu dem Innenraum des Tiegels (oder Vorratsreservoirs) zwischen der Kolbenkanalinnenwand und dem Kolben vorhanden ist. Alternativ oder zusätzlich können die schlitzförmigen Vertiefungen in der Außenfläche des Kolbens vorgesehen sein.

Das Füllen des Laderaums kann beispielsweise mit dem Erreichen der eingezogenen Stellung des Kolbens beendet sein, d.h. in der darauffolgenden Bewegung des Kolbens von der eingezogenen Stellung in die ausgefahrene Stellung erfolgt keine weitere Füllung des Laderaums. Alternativ kann das Füllen des Laderaums beispielsweise erst in der Bewegung des Kolbens von der eingezogenen Stellung in die ausgefahrene Stellung beendet werden, insbesondere in beispielsweise einem ersten Bewegungsbereich (beispielsweise einem ersten Bewegungsbereich der bevorzugt kleiner 30% und größer 2%, noch bevorzugt kleiner 20% und größer 10% wie z.B. 10%, 15% oder 17% des gesamten Bewegungsbereich des Kolbens von der eingezogenen Stellung in die ausgefahrene Stellung ist). Dies ist insbesondere bevorzugt der Fall, wenn sich in der Bewegung des Kolbens von der ausgefahrenen Stellung in die eingezogene Stellung Dampfblasen in dem noch in dem Kolbenkanal bzw. Düsenbauteildurchgangsloch vorhandenen zu druckenden Material bilden und diese erst in der Zurückbewegung in sich zusammenfallen.

Das Vorspannelement ist insbesondere in seiner Vorspannrichtung elastisch verformbar. Das Vorspannelement hat in seiner Vorspannrichtung bevorzugt ein erstes Ende, dass an dem Gehäuse des Druckkopfs abgestützt (beispielsweise anliegt oder befestigt) ist. An seinem zu dem ersten Ende in der Vorspannrichtung entgegengesetzten zweiten Ende ist das Vorspannelement bevorzugt unmittelbar oder mittelbar (über ein weiteres Bauteil) an dem Kolben abgestützt. Die Vorspannrichtung entspricht bevorzugt der Aktuationsrichtung des Aktuators in entgegengesetzter Richtung. In einem ersten Beispiel ist das Vorspannelement so angeordnet und ausgebildet, dass es den in der eingezogenen Stellung befindlichen Kolben, insbesondere das zweite Kolbenende, mit einer Kraft in Richtung zu der Düsenaustrittsöffnung hin vorspannt und sich mit der Bewegung des Kolbens in die ausgefahrene Stellung ausdehnt bzw. elastisch derart verformt, dass seine Erstreckung in Richtung der Düsenaustrittsöffnung zunimmt. Das Vorspannelement ist also bevorzugt bei in der eingezogenen Stellung befindlichem Kolben gestaucht. Besonders bevorzugt ist das Vorspannelement auch bei in der ausgefahrenen Stellung befindlichen Kolben gestaucht, nur weniger stark als bei in der eingezogenen Stellung befindlichem Kolben. Bevorzugt ist das Vorspannelement in dem ersten Beispiel eine Druckfeder. Umgekehrt kann in einem zweiten Beispiel das Vorspannelement so angeordnet und ausgebildet sein, dass es den in der eingezogenen Stellung befindlichen Kolben, insbesondere das zweite Kolbenende, mit einer Kraft in Richtung (Aktuationsrichtung y) zu der Düsenaustrittsöffnung hin vorspannt und sich mit der Bewegung des Kolbens in die ausgefahrene Stellung zusammenzieht bzw. elastisch derart verformt, dass seine Erstreckung in Richtung zu der Düsenaustrittsöffnung (Aktuationsrichtung y) abnimmt. Das Vorspannelement ist also bei in der eingefahrenen Stellung befindlichem Kolben gedehnt. Das Vorspannelement ist in diesem Fall bevorzugt eine Zugfeder. Je nach Ausbildung des Vorspannelements und weiterer Parameter, wie beispielsweise der Auslenkung aus der Ruhestellung, kann das Vorspannelement bei in der maximal ausgefahrenen Stellung befindlichem Kolben spannungsfrei, mit geringerer Vorspannung in gleicher Richtung oder mit Vorspannung in der anderen Richtung vorgesehen sein.

Beispielsweise ist der Aktuator, insbesondere wenn er als Piezoaktuator ausgeführt ist, an seinem (in der Aktuationsrichtung) der Düsenaustrittsöffnung zugewandten Ende an dem Aktautor- bzw. Druckkopfgehäuse abgestützt oder befestigt. Das in der Aktuationsrichtung entgegengesetzte (zweite) Ende ist bevorzugt an der Kolbenaufhängung und/oder einem der Enden des Vorspannelements abgestützt oder befestigt. Die Kolbenaufhängung dient letztendlich zur Verbindung des Kolbens mit dem zweiten Ende des Aktuators und dem Vorspannelement und kann integral mit oder separat zu dem Kolben, dem Vorspannelement oder dem Aktuator ausgebildet sein. Das Vorspannelement kann beispielsweise, gesehen in der Aktuationsrichtung ausgehend von der Düsenaustrittsöffnung, hinter dem Aktuator angeordnet sein. In diesem Fall ist es bei in der eingezogenen Stellung befindlichem Kolben gestaucht und bei in der ausgefahrenen Stellung befindlichem Kolben nicht oder weniger gestaucht. Alternativ kann das Vorspannelement beispielsweise, gesehen in der Aktuationsrichtung ausgehend von der Düsenaustrittsöffnung, vor dem der Düsenaustrittsöffnung abgewandten Ende des Aktuators vorgesehen sein. Das gesehen in der Aktuationsrichtung ausgehend von der Düsenaustrittsöffnung erste Ende ist auch hier bevorzugt an dem Aktuatorgehäuse befestigt und das gesehen in der Aktuationsrichtung ausgehend von der Düsenaustrittsöffnung zweite Ende an dem Aktuator. Das Vorspannelement ist also bevorzugt parallel und radial überlappend mit dem Aktuator vorgesehen. In diesem Fall ist es bei in der eingezogenen Stellung befindlichem Kolben gedehnt und bei in der ausgefahrenen Stellung befindlichem Kolben nicht oder weniger gedehnt, also bevorzugt als Zugfeder ausgebildet.

Bevorzugt ist der Aktuator als Piezostapel ausgebildet, der im Wesentlichen in Verlängerung zu dem Kolben angeordnet ist. In diesem Fall erstreckt sich die Kolbenaufhängung bevorzugt parallel zu dem Piezostapel, bevorzugt ist sie hohlzylindrisch ausgebildet und umgibt den Piezostapel radial in Bezug auf die Aktuationsrichtung.

In einem weiteren Beispiel ist der Aktuator als Ringpiezo (ringförmiger Piezo/Piezostapel) ausgebildet, der den Kolben wenigstens teilweise radial, d.h. senkrecht zu der Aktuationsrichtung umgibt. In diesem Fall kann die Kolbenaufhängung beispielsweise als Kreisscheibe ausgebildet sein, die das zweite Ende des Ringpiezos mit dem der Düsenaustrittsöffnung abgewandten Ende des Kolbens verbindet. Weiterhin kann das Vorspannelement, insbesondere das als Druckfeder ausgebildete Vorspannelement, auf der der Düsenaustrittsöffnung abgewandten Seite der Kolbenaufhängung abgestützt sein.

Der Kolben und/oder die Kolbenaufhängung und/oder das Vorspannelement können beispielsweise so ausgebildet sein, dass die eingezogene Stellung und/oder die ausgefahrene Stellung vollständig ohne mechanische Anschläge angefahren werden (freischwingendes System). Alternativ können beispielsweise einseitig oder beidseitig mechanische Anschläge derart vorgesehen sein, dass die ausgefahrene Stellung und/oder die eingezogene Stellung über einen jeweiligen Anschlag definiert werden. Weiterhin kann der Anschlag in der ausgefahrenen Stellung insbesondere durch den Aktuator, insbesondere den Piezoaktuator, realisiert werden.

Bevorzugt ist weiter eine Steuerung vorgesehen, mittels der der Aktuator zum Erzeugen bzw. Abspritzen eines Tropfens ansteuerbar ist. Insbesondere ist mittels der Steuerung direkt oder mittelbar eine Spannung an einem als Piezoaktuator ausgeführten Aktuator anlegbar.

Bevorzugt ist die Steuerung so ausgebildet bzw. wird der Aktuator so gesteuert, dass jeder einzelne Vorgang zur Erzeugung eines einzelnen Tropfens grundsätzlich wie folgt abläuft: in einem ersten Schritt wird der Kolben durch Aktuierung des Aktuators ausgehend von ersten Stellung (Ausgangsstellung), die der ausgefahrenen Stellung des Kolbens entspricht, in Richtung der eingezogenen Stellung beschleunigt. Anschließend wird der Kolben durch geringere Aktuierung oder Beenden der Aktuierung des Aktuators durch das Vorspannelement abgebremst und anschließend in die Gegenrichtung beschleunigt, so dass sich die Bewegungsrichtung des Kolbens in einer zweiten Stellung (Umkehrpunkt, oberer Totpunkt) umkehrt (bevorzugt unmittelbar, also ohne dort zu verharren) und er durch das Vorspannelement zurück in Richtung der ersten Stellung zurückbewegt wird. In dieser Zurückbewegung wird durch die Verdrängung des Materials in dem Laderaum und dem damit ggfs. verbundenen Impuls auf das vor dem Laderaum vorhandenem Material in bzw. an der Düsenöffnung ein Tropfen erzeugt und abgespritzt. Entweder wird der Aktuator vor dem Erreichen der ersten Stellung bevorzugt derart betätigt, dass die Bewegung des Kolbens in Richtung der ersten Stellung abgebremst wird und der Kolben in der ersten Stellung bevorzugt zum Stillstand kommt, oder es ist beispielsweise ein entsprechender Anschlag mit dem Aktuator oder einem separaten Bauteil vorgesehen, so dass der Kolben in der ersten Stellung bevorzugt zum Stillstand kommt. Somit stellt auch die erste Stellung einen Umkehrpunkt bzw. den unteren Totpunkt dar.

Zur Erzeugung des nächsten Tropfens in einem Druckvorgang, in dem aufeinanderfolgend mehrere Tropfen erzeugt werden, wird der obige erste Schritt von neuem gestartet, der Aktuator wird also wieder derart betätigt, dass der Kolben wieder ausgehend von der ersten Stellung in Richtung der zweiten Stellung bewegt wird. Je nach Ausführung und Bedarf wird der Aktuator entweder derart gesteuert, dass der Kolben vor dem Start der Erzeugung des nächsten Tropfens eine vorbestimmte Zeitspanne (Abklingzeit) in der ersten Stellung stillsteht (in Ruhe verweilt), bevor die Aktuierung zur Bewegung in Richtung der zweiten Stellung beginnt, oder derart gesteuert, dass die Erzeugung des nächsten Tropfens sich unmittelbar an die Erzeugung des vorherigen Tropfens anschließt. In letzterem Fall ist die vorbestimmte Zeitspanne (Abklingzeit) im Wesentlichen null. Die Stellung wird daher auch als Ruhestellung oder Abklingstellung bezeichnet.

Durch die derart gesteuerte Tropfenerzeugung kann die Qualität der Tropfen maßgeblich gesteigert werden, da auch einem ersten Tropfenerzeugungsvorgang folgender zweiter, dritter oder n-ter Tropfenerzeugungsvorgang jeweils in einem System gestartet wird, in dem Schwingungen minimiert oder im Wesentlichen nicht vorhanden sind. Gründe hierfür sind einerseits die geringe oder nicht vorhandene Flüssigkeitsmenge zwischen Kolben und Düsenaustrittsöffnung bei in der ersten Stellung befindlichem Kolben, die zu einer geringen Schwingungsenergie führt, andererseits die der erneuten Tropfenerzeugung vorgelagerte Abklingzeit, in der eventuell noch vorhandene Schwingungen abklingen können.

Die minimierten oder im Wesentlichen nicht vorhandenen Schwingungen beim Start jedes Tropfenerzeugungsvorgangs auch in einer Reihe von Tropfenerzeugungsvorgängen führen dazu, dass jede Tropfenerzeugung ausgehend von einer gleichbleibenden Ausgangslage erfolgt. Hierdurch können der Aktuierungsprozess zum Laden des Laderaums und die daran anschließende Rückbewegung zum Erzeugen und Abspritzen des Tropfens optimiert werden, ohne dass von vorherigen Tropfenerzeugungsvorgängen stammende Schwingungen den Prozess überlagern. Hierdurch wiederum können Tropfen mit einer höheren maximalen Frequenz erzeugt werden.

Die Bewegungsgeschwindigkeiten oder Beschleunigungen des Kolbens können in beide Richtungen individuell eingestellt oder ausgelegt werden, einerseits durch Wahl des Aktuators, andererseits durch Wahl des Vorspannelements. Für die Minimierung oder Eliminierung der Schwingungen vor dem Start des darauffolgenden Vorgangs zur Tropfenerzeugung ist insbesondere die Geschwindigkeit der Bewegung des Kolbens von der ersten Stellung in die zweite Stellung zum Laden des Laderaums entscheidend. Je schneller die Bewegung ist, desto mehr Schwingungen werden in das geladene System induziert. Umgekehrt kann durch das Vorsehen oder Verlängern der Abklingzeit solchen Schwingungen entgegengewirkt werden. Abklingzeit und Geschwindigkeit sind daher je nach Anwendungsfall und Systemaufbau aufeinander abzustimmen.

Bevorzugt wird der Aktuator derart gesteuert, dass er bei bevorzugt maximaler zulässiger Betriebsfrequenz 50% bis 95%, bevorzugt 60% bis 90% und noch bevorzugter 70 % bis 90 %, wie beispielsweise 70% oder 80% der Gesamtbewegungszeit, die der Kolben für die Bewegung von der ersten Stellung in die zweite Stellung und wieder zurück in die erste Stellung (also ohne die Abklingzeit) benötigt, für die Bewegung von der ersten Stellung in die zweite Stellung benötigt. Die Bewegungszeit von der ersten Stellung in die zweite Stellung ist also bevorzugt gleich lang oder noch bevorzugter länger als die von der zweiten Stellung in die erste Stellung zurück.

Die Abklingzeit beträgt bei bevorzugt maximaler zulässiger Betriebsfrequenz bevorzugt 0% bis 70%, noch bevorzugter 0% bis 60% und noch bevorzugter 0% bis 50%, wie beispielsweise 0% oder 20% oder 50% der Gesamtdauer jedes Vorganges der Tropfenerzeugung (Bewegung von der ersten Stellung in die zweite Stellung und wieder zurück (Gesamtbewegungszeit) zuzüglich der Abklingzeit). Alternativ beträgt die Abklingzeit bei bevorzugt maximaler zulässiger Betriebsfrequenz bevorzugt 0% bis 70%, noch bevorzugter 10% bis 60% und noch bevorzugter 20% bis 50%, wie beispielsweise 20% oder 40% oder 50% der Gesamtdauer jedes Vorganges der Tropfenerzeugung (Bewegung von der ersten Stellung in die zweite Stellung und wieder zurück (Gesamtbewegungszeit) zuzüglich der Abklingzeit).

Bevorzugt ist der Druckkopf derart ausgebildet, dass bei bevorzugt maximaler zulässiger Betriebsfrequenz Tropfen mit einer (maximalen) Frequenz von bevorzugt bis zu 500Hz, noch bevorzugter bis 1000Hz und noch bevorzugter bis zu 1500 Hz abspritzbar sind, wie beispielsweise 500Hz oder 1000Hz. Die angegebenen Frequenzen sind bevorzugt die jeweils maximalen oder maximal zulässigen Betriebsfrequenzen. Je nach Anwendung kann der jeweilige Druckkopf selbstredend mit niedrigeren Frequenzen betrieben werden.

Alle Parameter des Druckkopfes, insbesondere die Frequenz, Abklingzeit und Bewegungszeit für die erste Bewegung in die zweite Stellung und die zweite Bewegung in die erste Stellung zurück werden bevorzugt derart aufeinander abgestimmt, dass zu Beginn jedes Tropfenerzeugungsvorgangs das System, insbesondere die vor dem Kolben in dem Düsenbauteildurchgangsloch vorhandene Flüssigkeit, im Wesentlichen schwingungsfrei ist. Die Einstellung der Parameter kann durch einfache Simulation oder Versuche ermittelt werden.

Im Falle von beispielhaften 500 Hz stehen für jeden Vorgang zur Erzeugung eines Tropfens 2ms zur Verfügung. Falls keine Abklingzeit vorgesehen ist, wird der Aktuator entsprechend bevorzugt derart gesteuert, dass er bevorzugt in 1ms bis 1,9ms von der ersten Stellung in die zweite Stellung bewegt wird und entsprechend in 1ms bis 0,1ms von der zweiten Stellung in die erste Stellung bewegt wird. Bei einer Abklingzeit von 1ms (50% der Gesamtdauer) wird der Aktuator entsprechend bevorzugt derart gesteuert, dass er bevorzugt in 0,5ms bis 0,95ms von der ersten Stellung in die zweite Stellung bewegt wird und entsprechend in 0,5ms bis 0,05ms von der zweiten Stellung in die erste Stellung bewegt wird. Bei höheren Frequenzen werden die Zeiten entsprechend kürzer.

Die erste Stellung entspricht bevorzugt der ausgefahrenen Stellung oder liegt zwischen der eingezogenen Stellung und der ausgefahrenen Stellung. Die zweite Stellung entspricht bevorzugt der eingezogenen Stellung oder liegt zwischen der eingezogenen Stellung und der ausgefahrenen Stellung auf der Seite der eingezogenen Stellung in Bezug auf die erste Stellung. Die Stellungen können je nach Anforderung variiert werden.

Der Hub des Kolbens beträgt bei Aktuierung bevorzugt zwischen 5 µm und 55 µm, noch bevorzugter zwischen 10µm und 45µm und noch bevorzugter zwischen 15µm und 40 µm, wie beispielsweise 20 µm, 25µm oder 30µm, Der Durchmesser des Kolbens beträgt bevorzugt zwischen 2 mm und 10 mm, noch bevorzugter zwischen 4 mm und 7 mm und noch bevorzugter zwischen 5 mm und 6 mm, wie beispielsweise 5,7 mm, 5,8 mm oder 5,9 mm. Die Tropfengröße liegt bei einer Aktuierung von 26 µm und einem Kolbendurchmesser von 5,8 mm beispielsweise im Bereich von 500µm.

Als Aktuator kommt beispielsweise ein Piezostapel 80-AE0707D44H40DF der Firma KE-MET oder ein Ringpiezo zum Einsatz.

Weiterhin betrifft die Offenbarung ein Drucksystem, dass neben dem beanspruchten und beschriebenen Druckkopf bevorzugt eine Relativbewegungsvorrichtung (wie beispielsweise einen in mehrere Richtungen bewegbaren Roboterarm oder einen motorisch verfahrbaren Werktisch), mittels der der Druckkopf bezüglich einer zu bedruckenden Werkstückoberfläche verfahrbar ist, aufweist. Bevorzugt weist das Drucksystem eine weitere Steuerung zum Steuern der Relativbewegungsvorrichtung auf oder weisen der Aktuator und die Relativbewegungsvorrichtung eine gemeinsame Steuerung auf. Weiterhin ist bevorzugt eine Zuführvorrichtung zum Zuführen des Rohmaterials, Ausbilden der Schmelze im Tiegel oder zum Zuführen bereits flüssiger Schmelze in den Tiegel vorgesehen. Alternativ zu dem Tiegel kann die Schmelze auch unmittelbar zu dem Laderaum zugeführt werden.

Es versteht sich von selbst, dass obige beispielhafte oder bevorzugte Ausbildungen miteinander frei kombinierbar sind, solange dies nicht explizit ausgeschlossen oder nicht möglich ist.

Der Druckkopf ist bevorzugt so ausgebildet, dass für jede Tropfenerzeugung in einem ersten Schritt die Ladung des Laderaums durch Bewegung des Kolbens von der ausgefahrenen Stellung in die eingezogene Stellung erfolgt und anschließend, in einem zweiten Schritt, der Tropfen durch die Zurückbewegung in die ausgefahrene Stellung erzeugt bzw. abgespritzt wird. Durch die so realisierte inverse Tropfenerzeugung können Schwingungen in dem zu druckenden Material minimiert werden. Schwingungen können bevorzugt weiter minimiert werden, indem der Aktuator vor dem ersten Schritt und/oder nach dem zweiten Schritt während der Abklingzeit bevorzugt nicht betätigt wird, so dass der Kolben in seiner ausgefahrenen Stellung verweilen oder in diese Stellung ausschwingen kann. Die ausgefahrene Stellung wird entsprechend auch als Ruhestellung bezeichnet.

Der Aktuator befindet sich also bei in der Ruhestellung befindlichem Kolben in seiner Ruhelage. Dadurch, dass der Aktuator bei in der Ruhestellung, also in der ausgefahrenen Stellung befindlichem Kolben nicht betätigt wird, ist die Beanspruchung und damit die Lebensdauer des Aktuators und gegebenenfalls der Steuerung verbessert. Dies ist insbesondere der Fall beispielsweise bei der Verwendung von Piezoaktuatoren, die in ihrer Ruhelage entladen sind.

Im Folgenden werden beispielhafte Ausführungsformen anhand der Figuren erläutert, von denen zeigen:
- Fig. 1: eine teilweise geschnittene perspektivische und schematische Ansicht eines Drucckopfs nach einer ersten Ausführungsform,
- Fig. 2: eine vereinfachte, schematische Darstellung einer Aktuatorbaugruppe nach der ersten Ausführungsform des Druckkopfs, und
- Fig. 3: eine vereinfachte, schematische Darstellung einer Aktuatorbaugruppe nach einer zweiten Ausführungsform des Druckkopfs.

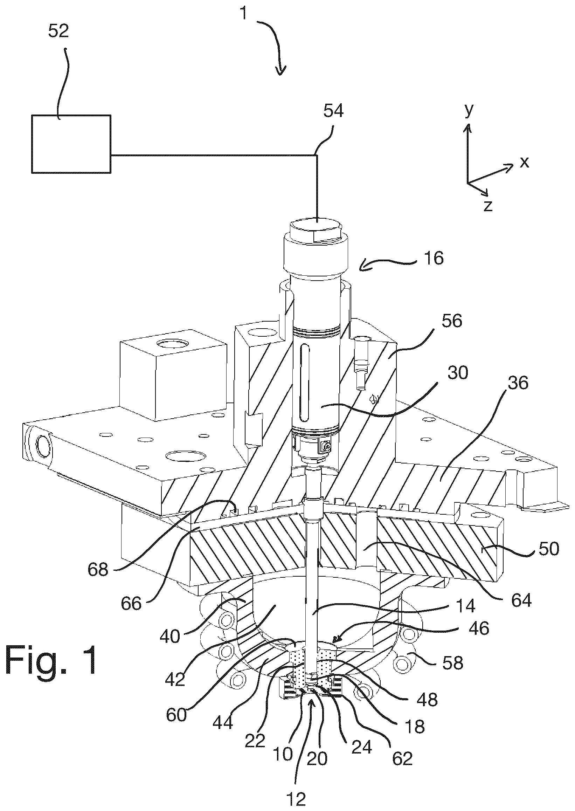

Die Figur 1 zeigt einen Druckkopf 1 gemäß einer ersten Ausführungsform für das Drucken von flüssiger Metallschmelze zur additiven Fertigung eines Bauteils. Der Druckkopf 1 weist eine Höhe in einer y-Richtung, eine Breite in einer x-Richtung und eine Tiefe in einer z-Richtung entsprechend dem in Figur 1 gezeigten Koordinatensystem auf. Der Druckkopf weist ein Druckkopfgehäuse 36 auf. Das Druckkopfgehäuse 36 ist in der vorliegenden Ausführungsform grundsätzlich plattenförmig in einer durch die x- und z-Richtung aufgespannten x-z-Ebene ausgebildet. Das Druckkopfgehäuse 36 ist beispielsweise dazu ausgebildet, an einem nicht gezeigten Roboterarm zur Bewegung des Druckkopfes relativ zu einem nicht gezeigten Werkstück befestigt zu werden. Das Druckkopfgehäuse 36 weist auf seiner ersten (oberen) Plattenseite einen zylinderförmigen Aktautor-Haltebereich 56 zum Halten einer Aktuatorbaugruppe 16 auf.

Weiterhin ist ein plattenförmiges Isolierbauteil 50 an der zweiten (unteren) Plattenseite des Druckkopfgehäuse 36 angebracht, an dessen unterer Seite (Seite, die dem Druckkopfgehäuse 36 abgewandt ist) wiederum ein Tiegel 40 angebracht ist. Der Tiegel 40 ist also über das Isolierbauteil 50, das eine thermische Isolation zwischen dem Tiegel 40 und dem Druckkopfgehäuse 36 schafft, an dem Druckkopfgehäuse 36 befestigt.

Der Tiegel 40 bildet ein Vorratsreservoir 42 zur Aufnahme von bereits verflüssigtem Druckmaterial, insbesondere Metallschmelze. Alternativ kann die Metallschmelze in dem Tiegel durch Zuführen von noch nicht verflüssigtem Metallmaterial und Schmelzen desselben in dem Tiegel 40 hergestellt werden. Zur Beheizung des Tiegels 40 ist eine Heizeinrichtung vorgesehen, die hier in Form von Induktionsschleifen 58, die den Tiegel 40 ringförmig umgeben, zur induktiven Erwärmung der Metallschmelze ausgebildet ist. Die Heizeinrichtung kann beispielsweise auch in die Tiegelwand integriert ausgebildet sein. Der Tiegel 40 ist im Wesentlichen topfförmig bzw. schüsselförmig ausgebildet, wobei der obere (offene) Rand an dem Isolationsbauteil 50 befestigt ist.

Im Bodenbereich 44, in dem sich die Schmelze sammelt, weist der Tiegel 40 ein Bodenloch 46 auf. In diesem Bodenloch 46 ist in dieser Ausführungsform ein Kolbenführungsbauteil (hier als eine Führungshülse 60 ausgebildet) eingesetzt. Die Führungshülse 60 weist ein (zentrales) Durchgangsloch in der y-Richtung auf, das den Kolbenkanal 22 ausbildet. Der Kolbenkanal 22 weist in einem oberen Bereich (einem Bereich, der dem Vorratsreservoir 42 zugewandt ist), Überströmschlitze 48. Diese sind in der Wand des Kanals ausgebildet und verlaufen ausgehend von dem Tiegelinnenraum (Vorratsreservoir 42) entlang des Kolbenkanals 22. Der Außendurchmesser der Führungshülse 60 verringert sich ausgehend von der Innenseite des Tiegels 40 nach außen, hier stufenförmig. Der Innendurchmesser des Bodenlochs 46 verringert sich entsprechend, so dass die Führungshülse 60 von innen nach außen in dem Bodenloch des Tiegels 40 gehalten wird. Bevorzugt ist die Führungshülse 60 in das Bodenloch 46 des Tiegels eingepresst.

Das dem Vorratsreservoir 42 entgegengesetzte untere Ende der Führungshülse 60 bildet mit einem Spannbauteil 62 einen Bajonettverschluss (Einzelheiten nicht gezeigt) aus. Mittels des Bajonettverschlusses wird zwischen dem Spannbauteil 62 und dem unteren Ende der Führungshülse 60 das Düsenbauteil 10 in Form einer Düsenplatte eingespannt. Der Bajonettverschluss ist beispielhaft und kann durch andere Spannmechanismen ersetzt werden. Das Düsenbauteil (die Düsenplatte) 10 weist ein sich in der y-Richtung erstreckendes Düsenbauteildurchgangsloch 20 auf, welches auf seiner Unterseite (dem Tiegelinnenraum abgewandte Seite) in der Düsenaustrittsöffnung 12 mündet. Bevorzugt verjüngt sich das Düsenbauteildurchgangsloch 20 zu der Düsenaustrittsöffnung 12.

Weiterhin ist ein Kolben 14 vorgesehen, der sich von der Aktuatorbaugruppe 16 bis in den Kolbenkanal 22 erstreckt. Der Kolben 14 ist so ausgebildet, dass ein erstes Kolbenende 18, das dem Düsenbauteil 10 zugewandt ist, in dem Kolbenkanal 22 endet. Das erste Kolbenende 18 wird bevorzugt in dem Kolbenkanal 22 geführt. Das erste Kolbenende 18 hat also Spielpassung in dem Kolbenkanal 22. Die Düsenaustrittsöffnung 12, das Düsenbauteildurchgangsloch 20, der Kolbenkanal 22, der Kolben 14 und die Aktuatorbaugruppe 16, insbesondere der Aktuator und dessen Aktuationsrichtung und das Vorspannelement 26, liegen alle bevorzugt auf einer Linie in der y-Richtung.

Weiterhin ist in dem Isolierbauteil 50 bevorzugt ein Zuführkanal 64 für die Metallschmelze vorgesehen. Zwischen dem Isolierbauteil 50 und dem Druckkopfgehäuse 36 ist in dieser Ausführungsform weiter eine Dichtplatte 66 vorgesehen. Mittels dieser werden in dem Drucckopfgehäuse 36 vorgesehene Kühlkanäle 68 (beispielsweise für Kühlwasser) abgedichtet.

Die Aktuatorbaugruppe 16 ist in dem Aktuator-Haltebereich 56 beispielsweise eingepresst oder über nicht gezeigte Spannmittel bevorzugt starr befestigt.

Weiterhin ist eine Steuerung 52 zur Steuerung der Aktuatorbaugruppe 16 vorgesehen, die über eine Steuerungsleitung 54 mit der Aktuatorbaugruppe 16 verbunden ist. Die Steuerung 52 ist wie üblich ausgebildet und weist beispielsweise eine Stromversorgung, eine CPU, einen entsprechenden Speicher und Eingabe- und Ausgabemittel auf.

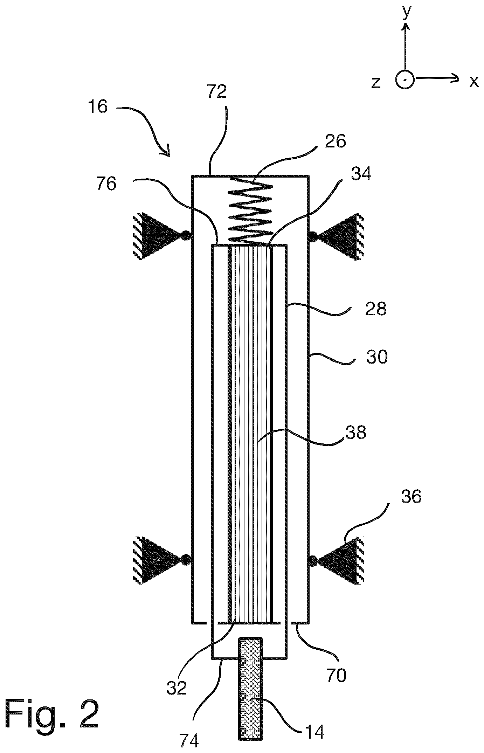

Unter Bezugnahme auf Fig. 2 wird im Folgenden die Aktuatorbaugruppe 16 detaillierter beschrieben. Die Aktuatorbaugruppe 16 weist zunächst ein hohles, hier in der y-Richtung hohlzylindrisch ausgebildetes Aktuatorgehäuse 30 auf, welches, wie oben angegeben, im eingebauten Zustand starr mit dem Druckkopfgehäuse 36 verbunden ist. Das Aktuatorgehäuse 30 weist in der y-Richtung eine Bodenwand 70 und eine Deckenwand 72 auf, wobei die Bodenwand 70 näher an der Düsenaustrittsöffnung 12 als die Deckenwand 72 ist.

Im Innenraum des Aktuatorgehäuses 30 ist ein Piezoaktuator 38 (hier ein Piezostapel) vorgesehen, der ausgehend von einer Ruhelage, in der er entladen ist und keine Spannung anliegt, durch Anlegen einer Spannung seine Längenausdehnung in einer Aktuationsrichtung vergrößert. Der Piezoaktuator 38 ist derart angeordnet, dass seine Aktuationsrichtung der y-Richtung entspricht. Der Piezoaktuator 38 hat in seiner Aktuationsrichtung ein erstes Ende 32 und ein entgegengesetztes zweites Ende 34, das weiter entfernt zu der Düsenaustrittsöffnung 12 als das erste Ende 32 angeordnet ist. Das erste Ende 32 ist an der Innenseite der Bodenwand 70 in der y-Richtung abgestützt, bevorzugt befestigt. Das zweite Ende 34 ist beabstandet zu der Deckenwand 72 vorgesehen.

Weiterhin ist in dem Innenraum des Aktuatorgehäuse 30 eine Kolbenaufhängung 28 vorgesehen. Die Kolbenaufhängung 28 dient zur Verbindung des zweiten Endes 34 des Piezoaktuators 38 mit dem in der y-Richtung parallel zu dem Piezoaktuator 38 in Richtung der Düsenaustrittsöffnung 12 (in den Figuren unten) angeordneten Kolben 14. Hierfür ist die Kolbenaufhängung 28 bevorzugt als hohlzylindrisches Bauteil ausgebildet, dessen unteres, erstes Ende 74 an dem Kolben 14 befestigt ist (beispielsweise durch eine Schraubverbindung). Das obere, zweite Ende der Kolbenaufhängung 28 ist in dieser Ausführungsform mit einem starren Deckel verschlossen und so angeordnet bzw. ausgebildet, dass der Piezoaktuator 38 darin aufgenommen ist und das zweite Ende 34 des Piezoaktuators 38 innenseitig an dem oberen zweiten Ende der Kolbenaufhängung anliegen kann. Wie in Fig. 2 gezeigt ist, ist die Kolbenaufhängung 28 dafür radial (in einer Richtung senkrecht zu der y-Richtung) zwischen dem Piezoaktuator 38 und dem Aktuatorgehäuse 30 vorgesehen und erstreckt sich durch die Bodenwand 70 des Aktuatorgehäuses 30 hindurch. Beispielsweise weist die Bodenwand 70 hierfür mehrere auf einem Kreisumfang über den Umfang verteilt angeordnete Führungsschlitze auf, durch die hindurch sich entsprechende in der y-Richtung vorgesehene Führungsabschnitte der Kolbenaufhängung 28 erstrecken. Die hohlzylindrische Kolbenaufhängung 28 weist hierfür entsprechende in y Richtung verlaufende Längsschlitze auf.

Weiterhin ist in dem Innenraum des Aktuatorgehäuses 30 ein Vorspannelement 26 (hier eine Druckfeder in Form einer Tellerfeder) vorgesehen, das zwischen dem oberen zweiten Ende der Kolbenaufhängung und der Deckenwand 72 bevorzugt unter Vorspannung vorgesehen ist. Ein erstes, unteres Ende des Vorspannelements 26 ist also in der y-Richtung auf der Außenseite des oberen zweiten Endes der Kolbenaufhängung 28 abgestützt und ein zweites, oberes Ende des Vorspannelements 26 ist in der y-Richtung auf der Innenseite der Deckenwand 72 abgestützt. Die Bauteile können lediglich aneinander abgestützt oder auch aneinander mittels nicht gezeigter Befestigungsmittel befestigt sein. Die Kolbenaufhängung 28 wird also durch das Vorspannelement 26 gegen den Piezoaktuator 38 (dessen oberes Ende) vorgespannt, so dass der Piezoaktuator in seine Ruhelage (zusammengezogene Stellung) vorgespannt ist. Die Längenausdehnung in der Aktuationsrichtung erfolgt also ausgehend von der Ruhelage gegen eine von dem Vorspannelement 26 erzeugte Vorspannkraft.

Der Druckkopf 1 und seine einzelnen Komponenten und die Steuerung 52 sind letztendlich so ausgebildet und aufeinander abgestimmt, dass, wenn an dem Piezoaktuator 38 keine Spannung anliegt und der Piezoaktuator 38 entladen ist und der Kolben 14 sich in seiner Ruhestellung, die der ausgefahrenen Stellung des Kolbens entspricht, befindet, das erste Kolbenende 18 nahe dem Düsenbauteil 10 angeordnet ist. Entsprechend ist ein sogenanntes Restvolumen, dass in dieser Stellung des Kolbens 14 in dem Kolbenkanal 22 auf Seite der Düsenaustrittsöffnung 12 des Kolbens 14 und dem Düsenbauteildurchgangsloch 20 ausgebildet wird, relativ klein.

Durch die Steuerung 52 ist anschließend eine (erste) Spannung an den Piezoaktuator 38 anlegbar. Durch das Anlegen der Spannung dehnt der Piezoaktuator 38 sich in der y-Richtung entgegen der Vorspannkraft des Vorspannelements 26 aus, was zu einer Bewegung des Kolbens 14 in Richtung weg von der Düsenaustrittsöffnung 12 führt. Durch diese Bewegung vergrößert sich das in dem Kolbenkanal 22 vor dem Kolben 14 verfügbare Volumen. Das zusätzlich verfügbare Volumen wird als Laderaum 24 (siehe Fig. 1) bezeichnet. Durch die in der Wand des Kolbenkanals 22 ausgebildeten Überströmungsschlitze 28 kann mit der Bewegung des Kolbens 14 nach oben daher neue Metallschmelze in den freigegebenen Laderaum nachfließen und diesen füllen. Die Bewegung wird letztendlich durch die Dehnfähigkeit des Piezoaktuators 38 und/oder die steigende Kraft des Vorspannelements 26 begrenzt.

Nach dem Erreichen der obersten Stellung, die der eingezogenen Stellung des Kolbens 14 entspricht, in der das Volumen des Laderaums maximal ist, wird mittels der Steuerung 52 die Spannung am Piezoaktuator 38 abgeschaltet und dieser entladen. Da der Piezoaktuator 38 in diesem Fall keine der Vorspannkraft des Vorspannelements 26 entgegenwirkende Kraft mehr aufbringt, drückt das Vorspannelement 26 den Piezoaktuator 38 zurück in Richtung seiner Ausgangsstellung, wodurch auch der Kolben 14 über die Kolbenaufhängung 28 zurück in seine Ruhestellung (ausgefahrene Stellung) zurückbewegt wird.

In dieser Bewegung zurück in die ausgefahrene Stellung wird die in dem Laderaum befindliche Metallschmelze durch das erste Kolbenende 18 verdrängt und in Richtung der Düsenaustrittsöffnung 12 bewegt. Insbesondere der Laderaum, das Restvolumen, die Kolbengeschwindigkeit, die Vorspannkraft des Vorspannelements 26, das Düsenbauteil 10 und die Düsenaustrittsöffnung 12 sind dabei auf bekannte Weise so aufeinander abgestimmt, dass in dieser Zurückbewegung die Metallschmelze unter Bildung eines Tropfens ausgestoßen wird. Die Bewegung in die ausgefahrene Stellung wird durch den Piezoaktuator 38 begrenzt (Anschlag).

Anschließend verweilt der Kolben 14 über eine bestimmte Abklingzeit in der Ruhestellung, bevor die nächste Ladung des Piezoaktuators 38 erfolgt.

Es versteht sich von selbst, dass der in der ersten Ausführungsform verwendete Piezoaktuator 38 ohne weiteres durch andere Aktuatoren ersetzt werden kann.

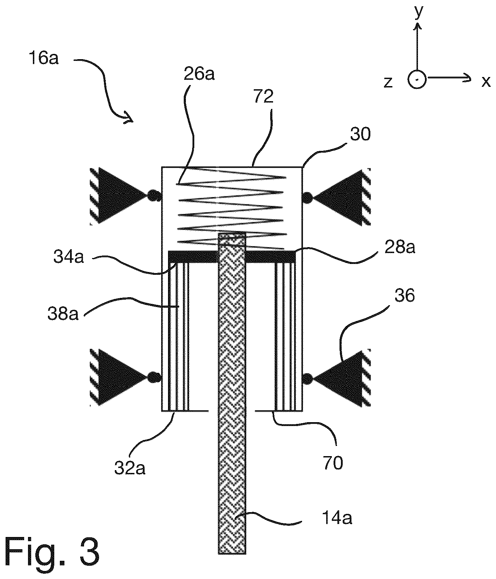

Im Weiteren wird eine zweite Ausführungsform der Aktuatorbaugruppe unter Bezugnahme auf Figur 3 beschrieben. Bauteile die identisch oder strukturell ähnlich zueinander sind, sind mit identischen Bezugszeichen versehen. Bei abweichenden Bauteile mit ähnlichen Funktionen wird dem ursprünglich verwendeten Bezugszeichen ein "a" angefügt. Zur Vermeidung von Wiederholungen werden nur die wesentlichen Unterschiede beschrieben.

Wie die Aktuatorbaugruppe 16 weist auch die Aktuatorbaugruppe 16a ein Aktuatorgehäuse 30 mit einer Bodenwand 70 und einer Deckenwand 72 auf, wobei die Bodenwand 70 näher an der Düsenaustrittsöffnung 12 angeordnet ist. Anders als in der Aktuatorbaugruppe 16 gemäß der ersten Ausführungsform ist in der Aktuatorbaugruppe 16a gemäß der zweiten Ausführungsform ein Piezoaktuator 38a in Form eines Ringpiezos vorgesehen. Ein erstes Ende 32a des Piezoaktuators 38a ist auf der Innenseite der Bodenwand 70 abgestützt oder an ihr befestigt.

Die Kolbenaufhängung 28a ist in dieser Ausführungsform lediglich als Kreisscheibe ausgebildet, die auf dem zweiten Ende 34a des Piezoaktuators 38a aufliegt oder an ihm befestigt ist. Die Kolbenaufhängung 28a dient einerseits zur Abstützung des zwischen der Deckenwand 72 des Aktuatorgehäuses 30 und der Kolbenaufhängung 28a vorgesehenen Vorspannelements 26a und andererseits zur Verbindung des Kolbens 14a mit dem zweiten Ende 34a des Piezoaktuators 38a. Der Kolben 14a erstreckt sich in dieser Ausführungsform durch ein in der Bodenwand 70 vorgesehenes zentrales Durchgangsloch bis in das Aktuatorgehäuse 30 hinein. Der Kolben 14a bzw. dessen zweites Ende ist beispielsweise über eine Schraubverbindung mit der Kolbenaufhängung 28a verbunden.

Die Funktionsweise der Ausführungsformen ist identisch.

Die Ausführungsformen können auf unterschiedlichste Weise abgewandelt werden:
Es können andere Aktuatortypen verwendet werden. Die Kolbenaufhängung kann integral, also einteilig mit dem Kolben ausgebildet sein. Die Kolbenaufhängung kann an dem Aktuator starr montiert sein, oder nur an diesem anliegen. Das Vorspannelement kann an dem Aktuatorgehäuse lediglich anliegen, oder daran befestigt sein. Das Vorspannelement kann an der Kolbenaufhängung lediglich anliegen, oder daran befestigt sein. Alternativ oder zusätzlich kann das Vorspannelement an dem Aktuator lediglich anliegen, oder daran befestigt sein. Das Vorspannelement kann an beliebigen anderen Stellen verbaut sein, solange es den Kolben, die Kolbenaufhängung oder den Aktuator in die Ruhestellung vorspannt und die Bauteile derart miteinander gekoppelt sind, dass der Kolben bei in Ruhestellung befindlichem Aktuator in seiner ausgefahrenen Stellung ist. Beispielsweise kann das Vorspannelement bei der ersten Ausführungsform zwischen dem unteren Ende der Kolbenaufhängung und der Bodenwand des Aktuatorgehäuses vorgesehen sein. In der zweiten Ausführungsform könnte das Vorspannelement zwischen einem oberen Ende des Kolbens und der Deckenwand des Aktuatorgehäuses vorgesehen sein. Für den Fall der Ausbildung als Zugfeder kann das Vorspannelement an der Bodenwand angeordnet sein und sich zu dem oberen Ende des Piezoaktuators erstrecken.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe. Die hier verwendeten Begriffe "ungefähr", "etwa", "circa", "im Wesentlichen" oder "im Allgemeinen", die in Zusammenhang mit einem messbaren Wert wie beispielsweise einem Parameter, einer Menge, einer Form, einer zeitlichen Dauer oder dergleichen verwendet werden, schließen Abweichungen oder Schwankungen von ± 10% oder weniger, vorzugsweise ± 5% oder weniger, weiter vorzugsweise ± 1% oder weniger und weiter vorzugsweise ± 0,1% des jeweiligen Wertes oder von dem jeweiligen Wert mit ein, sofern diese Abweichungen bei der Umsetzung der offenbarten Erfindung in die Praxis noch technisch sinnvoll sind. Es wird ausdrücklich darauf hingewiesen, dass der Wert, auf den sich der Begriff "ungefähr" bezieht, als solcher ausdrücklich und im Besonderen offenbart ist. Die Angabe von Bereichen durch Anfangs- und Endwerte umfasst all diejenigen Werte und Bruchteile dieser Werte, die von dem jeweiligen Bereich eingeschlossen sind, wie auch dessen Anfangs- und Endwerte.

### Bezugszeichenliste

- 1: Druckkopf
- 10: Düsenbauteil
- 12: Düsenaustrittsöffnung
- 14, 14a: Kolben
- 16, 16a: Aktuatorbaugruppe
- 18: erstes Kolbenende
- 20: Düsenbauteildurchgangsloch
- 22: Kolbenkanal
- 24: Laderaum
- 26, 26a: Vorspannelement (Federelement)
- 28, 28a: Kolbenaufhängung
- 30: Aktuatorgehäuse
- 32, 32a: erstes Ende Piezoaktuator
- 34, 34a: zweites Ende Piezoaktuator
- 36: Druckkopfgehäuse
- 38, 38a: Piezoaktuator
- 40: Tiegel
- 42: Vorratsreservoir
- 44: Bodenbereich
- 46: Bodenloch
- 48: Überströmungsschlitze
- 50: Isolierbauteil
- 52: Steuerung
- 54: Steuerungsleitung
- 56: Aktuator-Haltebereich
- 58: Heizspirale
- 60: Führungshülse
- 62: Spannbauteil
- 64: Zuführkanal
- 66: Dichtplatte
- 68: Kühlkanäle
- 70: Bodenwand des Aktuatorgehäuses
- 72: Deckenwand des Aktuatorgehäuses
- 74: unteres, erstes Ende der Kolbenaufhängung
- 76: oberes, zweites Ende der Kolbenaufhängung

## Patentansprüche

1. Druckkopf (1) für das Drucken von flüssiger Metallschmelze zur additiven Fertigung eines Bauteils, mit
einem Düsenbauteil (10) mit einer Düsenaustrittsöffnung (12),
einem Kolben (14; 14a), mittels dessen die Metallschmelze durch die Düsenaustrittsöffnung (12) abspritzbar ist,
einer Aktuatorbaugruppe (16; 16a) mit einem Aktuator, und
einem Vorspannelement, insbesondere einem Federelement,
bei dem
der Kolben (14; 14a) durch Betätigen des Aktuators von einer ausgefahrenen Stellung in eine eingezogene Stellung, in der ein der Düsenaustrittsöffnung (12) zugewandtes erstes Kolbenende (18) weiter weg von der Düsenaustrittsöffnung (12) als in der ausgefahrenen Stellung ist, in einer Aktuationsrichtung (y) bewegbar ist, und
das Vorspannelement (26; 26a) derart vorgesehen ist, dass es den in der eingezogenen Stellung befindlichen Kolben (14; 14a) in Richtung der ausgefahrenen Stellung vorspannt.

2. Druckkopf nach Anspruch 1, bei dem
ein Düsenbauteildurchgangsloch (20) in dem Düsenbauteil (10) vorgesehen ist, dass sich durch das Düsenbauteil (10) hindurch erstreckt und in der Düsenaustrittsöffnung (12) mündet,
ein Kolbenkanal (22), der mit dem Düsenbauteildurchgangsloch (20) in Verbindung steht oder mindestens teilweise durch das Düsenbauteildurchgangsloch (20) ausgebildet wird, vorgesehen ist, und
bei in der eingezogenen Stellung befindlichem Kolben (14) vor dem ersten Kolbenende (18) ein Laderaum (24) für abzuspritzende flüssige Metallschmelze ausgebildet wird, der mindestens teilweise durch den Kolbenkanal (22) ausgebildet wird, und bei in der ausgefahrenen Stellung befindlichem Kolben (14; 14a) das erste Kolbenende (18) in den Laderaum (24) vorsteht.

3. Druckkopf nach Anspruch 2, der so ausgebildet ist, dass
ein Füllen des Laderaums (24) mit der Metallschmelze bei der Bewegung des Kolbens (14; 14a) von der ausgefahrenen Stellung in die eingezogene Stellung erfolgt, und
mindestens ein Teil der Metallschmelze, die sich in der eingezogenen Stellung des Kolbens (14; 14a) zwischen dem Kolben und der Düsenaustrittsöffnung befindet, bei der Bewegung des Kolbens (14; 14a) von der eingezogenen Stellung in die ausgefahrene Stellung über die Düsenaustrittsöffnung (12) nach außen abspritzbar ist.

4. Druckkopf nach einem der Ansprüche 1 bis 3, der so ausgebildet ist, dass
das Betätigen des Aktuators zum Bewegen des Kolbens (14; 14a) von der ausgefahrenen Stellung in die eingezogene Stellung durch Zuführen von Energie oder Erhöhen der Energiezufuhr zu dem Aktuator erfolgt, und
nach Beenden des Zuführens oder Verringern des Zuführens von Energie, der Kolben (14; 14a) durch das Vorspannelement (26; 26a) in die ausgefahrene Stellung bewegt wird.

5. Druckkopf nach einem der Ansprüche 1 bis 4, bei dem
die Aktuatorbaugruppe (16; 16a) weiter eine Kolbenaufhängung (28; 28a) zur Verbindung des Kolbens (14; 14a) mit dem Aktuator und ein Aktuatorgehäuse (30) aufweist, und
der Aktuator an einem ersten Ende (32; 32a) in der Aktuationsrichtung (y) mit dem Aktuatorgehäuse (30) verbunden ist oder an diesem anliegt und an einem zweiten Ende (34; 34a) in der Aktuationsrichtung (y) mit der Kolbenaufhängung (28; 28a) verbunden ist oder an dieser anliegt.

6. Druckkopf nach Anspruch 5, bei dem
die Kolbenaufhängung (28; 28a) in dem Aktuatorgehäuse (30) in der Aktuationsrichtung (y) bewegbar gelagert ist.

7. Druckkopf nach Anspruch 5 oder 6, bei dem
das Aktuatorgehäuse (30) die Kolbenaufhängung (28; 28a) radial in Bezug auf die Aktuationsrichtung (y) umgibt und die Kolbenaufhängung (28; 28a) den Aktuator radial in Bezug auf die Aktuationsrichtung (y) umgibt, und
das Aktuatorgehäuse (30) und die Kolbenaufhängung (28; 28a) hohlzylindrisch ausgebildet sind.

8. Druckkopf nach einem der Ansprüche 5 bis 7, bei dem
das Vorspannelement (26; 26a) zwischen einerseits dem Aktuatorgehäuse (30) oder einem an dem Aktuatorgehäuse (30) in der Aktuationsrichtung (y) abgestützten Bauteil und andererseits dem Kolben (14; 14a) oder einem in der Aktuationsrichtung (y) an dem Kolben (14; 14a) abgestützten Bauteil oder der Kolbenaufhängung (28; 28a) vorgesehen ist, oder
das Vorspannelement (26; 26a) zwischen einerseits dem Aktuatorgehäuse (30) oder einem mit dem Aktuatorgehäuse in der Aktuationsrichtung (y) abgestützten Bauteil und andererseits dem zweiten Ende (34; 34a) des Aktuators vorgesehen ist.

9. Druckkopf nach einem der Ansprüche 1 bis 8, bei dem
der Aktuator ein Piezoaktuator (38; 38a) ist, der durch das Anlegen einer Spannung ausgehend von einer ersten Länge zu einer zweiten Länge in der Aktuationsrichtung (y) ausdehnbar ist, und
der Kolben (14; 14a) mit der Ausdehnung des Piezoaktuators (38; 38a) von der ersten Länge zu der zweiten Länge von der ausgefahrenen in die eingezogene Stellung bewegt wird.

10. Druckkopf nach einem der Ansprüche 1 bis 9, weiter aufweisend
einen mittels einer Heizung beheizbaren Tiegel (40) mittels dessen ein Vorratsreservoir (42) für die flüssige Metallschmelze ausgebildet wird,
bei dem
in einem Bodenbereich (44) des Tiegels (40) ein Bodenloch (46) vorgesehen ist, in das das Düsenbauteil eingesetzt ist oder durch das die Metallschmelze in das Düsenbauteildurchgangsloch (20) fließen kann, und
der Aktuator auf der dem Bodenbereich (44) in der Aktuationsrichtung (y) entgegengesetzten Seite des Tiegels (40) vorgesehen ist.

11. Druckkopf nach Anspruche 10, weiter aufweisend
ein Druckkopfgehäuse (36),
bei dem
das Druckkopfgehäuse (36) integral mit dem Aktuatorgehäuse (30) ausgebildet ist oder das Aktuatorgehäuse (30) an dem Druckkopfgehäuse (36) montiert ist, und
der Tiegel (40) direkt oder über ein Isolierbauteil (50), das eine thermische Isolierung liefert, an dem Druckkopfgehäuse (36) montiert ist.

12. Druckkopf nach Anspruch 11, der so ausgebildet ist, dass
das Vorratsreservoir (42) des Tiegels (40) bei in der eingezogenen Stellung befindlichem Kolben (14; 14a) mit dem Laderaum (24) in Verbindung steht, und
der in der eingezogenen Stellung befindliche Kolben (14; 14a) in den Kolbenkanal hineinragt und in der Wand des Düsenbauteildurchgangslochs (20) und/oder der Außenwand des Kolbens (14; 14a) Überströmungsschlitze (48) vorgesehen sind, die ein Einströmen von Metallschmelze in den Laderaum (24) bei in der eingezogenen Stellung befindliche Kolben (14; 14a) erlauben.

13. Verfahren zum Betreiben eines Druckkopfs nach einem der Ansprüche 1 bis 12, mit folgenden Schritten zur Erzeugung und zum Abspritzen eines Tropfens Metallschmelze
Befüllen des Laderaums mit Metallschmelze durch Betätigen des Aktuators zum Bewegen des Kolbens (14; 14a) entgegen der Vorspannkraft des Vorspannelements (26; 26a) von der ausgefahrenen Stellung in die eingezogene Stellung,
Beenden der Betätigung des Aktuators, und
Erzeugen und Abspritzen des Tropfens der Metallschmelze durch Zurückbewegen des Kolbens (14; 14a) in die ausgefahrene Stellung mittels der Vorspannung des Vorspannelements.

14. Verfahren nach Anspruch 13, bei dem zur Erzeugung und zum Abspritzen mehrere Tropfen hintereinander nach Zurückbewegen des Kolbens (14; 14a) in die ausgefahrene Stellung der weitere Schritt
Warten einer vorbestimmten Abklingzeit vor dem erneuten Befüllen des Laderaums mit Metallschmelze durch Betätigen des Aktuators erfolgt.

15. Verfahren nach Anspruch 13 oder 14, bei dem
der Schritt des Befüllens durch Bewegen des Kolbens (14; 14a) von der von der ausgefahrenen Stellung in die eingezogene Stellung zwischen 60% bis 90% einer Gesamtbewegungszeit in Anspruch nimmt, die der Kolben für die Bewegung von der ausgefahrenen Stellung in die eingezogene Stellung und wieder zurück in die ausgefahrene Stellung benötigt, und/oder
der Kolben (14; 14a) in der eingezogenen Stellung nicht verharrt.

## Claims

1. A print head (1) for printing liquid metal melt for the additive manufacturing of a component, comprising
a nozzle component (10) with a nozzle outlet opening (12),
a piston (14; 14a), by means of which the metal melt is ejectable through the nozzle outlet opening (12),
an actuator assembly (16; 16a) with an actuator, and
a pre-tensioning element, in particular a spring element,
wherein
the piston (14; 14a) is, by actuating the actuator, movable in an actuation direction (y) from an extended position to a retracted position, in which a first piston end (18) facing the nozzle outlet opening (12) is further away from the nozzle outlet opening (12) than in the extended position, and
the pre-tensioning element (26; 26a) is provided such that it pre-tensions the piston (14; 14a) located in the retracted position into the direction of the extended position.

2. Print head according to claim 1, wherein
a nozzle component through-hole (20) is provided in the nozzle component (10), which nozzle component through-hole extends through the nozzle component (10) and terminates in the nozzle outlet opening (12),
a piston channel (22), which is in communication with the nozzle component through-hole (20) or is at least partially formed by the nozzle component through-hole (20), is provided, and
with the piston (14) in the retracted position, a loading chamber (24) for the liquid metal melt to be ejected is formed in front of the first piston end (18), which loading chamber is at least partially formed by the piston channel (22), and with the piston (14; 14a) in the extended position, the first piston end (18) projects into the loading chamber (24).

3. Print head according to claim 2, which is configured such that
a filling of the loading chamber (24) with the metal melt occurs during the movement of the piston (14; 14a) from the extended position into the retracted position, and
at least a part of the metal melt, which is, with the piston (14) in the retracted position, provided between the piston and the nozzle outlet opening, is ejectable to the outside via the nozzle outlet opening (12) during the movement of the piston (14; 14a) from the retracted position into the extended position.

4. Print head according to any one of claims 1 to 3, which is configured such that
the actuation of the actuator for moving the piston (14; 14a) from the extended position into the retracted position occurs by supplying energy or increasing the energy supply to the actuator, and
after ending the supply or reducing the supply of energy, the piston (14; 14a) is moved into the extended position by the pre-tensioning element (26; 26a).

5. Print head according to any one of claims 1 to 4, wherein
the actuator assembly (16; 16a) further comprises a piston suspension (28; 28a) for connecting the piston (14; 14a) to the actuator, and an actuator housing (30), and
the actuator is, at a first end (32; 32a) in the actuation direction (y), connected to the actuator housing (30) or abuts against it and is, at a second end (34; 34a) in the actuation direction (y), connected to the piston suspension (28; 28a) or abuts against it.

6. Print head according to claim 5, wherein
the piston suspension (28; 28a) is supported in the actuator housing (30) movably in the actuation direction (y).

7. Print head according to claim 5 or 6, wherein
the actuator housing (30) surrounds the piston suspension (28; 28a) radially with respect to the actuation direction (y) and the piston suspension (28; 28a) surrounds the actuator radially with respect to the actuation direction (y), and
the actuator housing (30) and the piston suspension (28; 28a) are formed hollow-cylindrically.

8. Print head according to any one of claims 5 to 7, wherein
the pre-tensioning element (26; 26a) is provided between on the one hand the actuator housing (30) or a component supported on the actuator housing (30) in the actuation direction (y) and on the other hand the piston (14; 14a) or a component supported on the piston (14; 14a) in the actuation direction (y) or the piston suspension (28; 28a), or
the pre-tensioning element (26; 26a) is provided between on the one hand the actuator housing (30) or a component supported with the actuator housing in the actuation direction (y) and on the other hand the second end (34; 34a) of the actuator.

9. Print head according to any one of claims 1 to 8, wherein
the actuator is a piezo actuator (38; 38a) which is expandable from a first length to a second length in the actuation direction (y) by applying a voltage, and
the piston (14; 14a) is moved from the extended to the retracted position by the expansion of the piezo actuator (38; 38a) from the first length to the second length.

10. Print head according to any one of claims 1 to 9, further comprising
a crucible (40) heatable by means of a heater, by means of which a supply reservoir (42) for the liquid metal melt is formed,
wherein
a bottom hole (46) is provided in a bottom region (44) of the crucible (40), into which the nozzle component is inserted or through which the metal melt can flow into the nozzle component through-hole (20), and
the actuator is provided on the side of the crucible (40) opposite the bottom region (44) in the actuation direction (y).

11. Print head according to claim 10, further comprising
a print head housing (36),
wherein
the print head housing (36) is formed integrally with the actuator housing (30) or the actuator housing (30) is mounted on the print head housing (36), and
the crucible (40) is mounted directly or via an insulating component (50), which provides thermal insulation, on the print head housing (36).

12. Print head according to claim 11, which is configured such that
the supply reservoir (42) of the crucible (40) is in communication with the loading chamber (24) when the piston (14; 14a) is in the retracted position, and
the piston (14; 14a) located in the retracted position projects into the piston channel, and overflow slits (48) are provided in the wall of the nozzle component through-hole (20) and/or the outer wall of the piston (14; 14a), which allow an inflow of metal melt into the loading chamber (24) when the piston (14; 14a) is in the retracted position.

13. A method for operating a print head according to any one of claims 1 to 12, with the following steps for generating and ejecting a droplet of metal melt:
Filling the loading chamber with metal melt by actuating the actuator to move the piston (14; 14a) against the pre-tensioning force of the pre-tensioning element (26; 26a) from the extended position into the retracted position,
Ending the actuation of the actuator, and
Generating and ejecting the droplet of the metal melt by moving the piston (14; 14a) back into the extended position by means of the pre-tension of the pre-tensioning element.

14. Method according to claim 13, wherein for generating and ejecting a plurality of droplets one after another, after moving the piston (14; 14a) back into the extended position, the further step of
Waiting for a predetermined decay time before the renewed filling of the loading chamber with metal melt by actuating the actuator is performed.

15. Method according to claim 13 or 14, wherein
the step of filling by moving the piston (14; 14a) from the extended position into the retracted position takes up between 60% and 90% of a total movement time that the piston requires for the movement from the extended position into the retracted position and back again into the extended position, and/or
the piston (14; 14a) does not dwell in the retracted position.

## Revendications

1. Tête d'impression (1) pour l'impression de métal liquide en fusion pour la fabrication additive d'un composant, avec
un élément de buse (10) avec une ouverture de sortie de buse (12),
un piston (14 ; 14a), au moyen duquel le métal en fusion peut être éjecté par l'ouverture de sortie de buse (12),
un ensemble actionneur (16 ; 16a) avec un actionneur, et
un élément de précontrainte, en particulier un élément de ressort,
dans laquelle
le piston (14 ; 14a) est mobile dans une direction d'actionnement (y) par actionnement de l'actionneur d'une position sortie vers une position rentrée, dans laquelle une première extrémité de piston (18) tournée vers l'ouverture de sortie de buse (12) est plus éloignée de l'ouverture de sortie de buse (12) que dans la position sortie, et
l'élément de précontrainte (26 ; 26a) est prévu de telle sorte qu'il précontraint le piston (14 ; 14a) se trouvant dans la position rentrée en direction de la position sortie.

2. Tête d'impression selon la revendication 1, dans laquelle
un trou traversant d'élément de buse (20) est prévu dans l'élément de buse (10), qui s'étend à travers l'élément de buse (10) et débouche dans l'ouverture de sortie de buse (12),
un canal de piston (22), qui est en communication avec le trou traversant d'élément de buse (20) ou est formé au moins partiellement par le trou traversant d'élément de buse (20), est prévu, et
lorsque le piston (14) se trouve dans la position rentrée, un espace de chargement (24) pour du métal liquide en fusion à éjecter est formé devant la première extrémité de piston (18), qui est formé au moins partiellement par le canal de piston (22), et lorsque le piston (14 ; 14a) se trouve dans la position sortie, la première extrémité de piston (18) fait saillie dans l'espace de chargement (24).

3. Tête d'impression selon la revendication 2, qui est réalisée de telle sorte que
un remplissage de l'espace de chargement (24) avec le métal en fusion a lieu lors du mouvement du piston (14 ; 14a) de la position sortie vers la position rentrée, et
au moins une partie du métal en fusion, qui se trouve entre le piston et l'ouverture de sortie de buse dans la position rentrée du piston (14 ; 14a), peut être éjectée vers l'extérieur via l'ouverture de sortie de buse (12) lors du mouvement du piston (14 ; 14a) de la position rentrée vers la position sortie.

4. Tête d'impression selon l'une des revendications 1 à 3, qui est réalisée de telle sorte que
l'actionnement de l'actionneur pour déplacer le piston (14 ; 14a) de la position sortie vers la position rentrée s'effectue par apport d'énergie ou augmentation de l'apport d'énergie à l'actionneur, et
après l'arrêt de l'apport ou la réduction de l'apport d'énergie, le piston (14 ; 14a) est déplacé dans la position sortie par l'élément de précontrainte (26 ; 26a).

5. Tête d'impression selon l'une des revendications 1 à 4, dans laquelle
l'ensemble actionneur (16 ; 16a) présente en outre une suspension de piston (28 ; 28a) pour la liaison du piston (14 ; 14a) avec l'actionneur et un boîtier d'actionneur (30), et
l'actionneur est relié au boîtier d'actionneur (30) ou est en appui sur celui-ci à une première extrémité (32 ; 32a) dans la direction d'actionnement (y) et est relié à la suspension de piston (28 ; 28a) ou est en appui sur celle-ci à une seconde extrémité (34 ; 34a) dans la direction d'actionnement (y).

6. Tête d'impression selon la revendication 5, dans laquelle
la suspension de piston (28 ; 28a) est montée mobile dans le boîtier d'actionneur (30) dans la direction d'actionnement (y).

7. Tête d'impression selon la revendication 5 ou 6, dans laquelle
le boîtier d'actionneur (30) entoure la suspension de piston (28 ; 28a) radialement par rapport à la direction d'actionnement (y) et la suspension de piston (28 ; 28a) entoure l'actionneur radialement par rapport à la direction d'actionnement (y), et
le boîtier d'actionneur (30) et la suspension de piston (28 ; 28a) sont réalisés en forme de cylindre creux.

8. Tête d'impression selon l'une des revendications 5 à 7, dans laquelle
l'élément de précontrainte (26 ; 26a) est prévu entre, d'une part, le boîtier d'actionneur (30) ou un composant en appui sur le boîtier d'actionneur (30) dans la direction d'actionnement (y) et, d'autre part, le piston (14 ; 14a) ou un composant en appui sur le piston (14 ; 14a) dans la direction d'actionnement (y) ou la suspension de piston (28 ; 28a), ou
l'élément de précontrainte (26 ; 26a) est prévu entre, d'une part, le boîtier d'actionneur (30) ou un composant en appui avec le boîtier d'actionneur dans la direction d'actionnement (y) et, d'autre part, la seconde extrémité (34 ; 34a) de l'actionneur.

9. Tête d'impression selon l'une des revendications 1 à 8, dans laquelle
l'actionneur est un actionneur piézoélectrique (38 ; 38a) qui, par l'application d'une tension, est extensible partant d'une première longueur vers une seconde longueur dans la direction d'actionnement (y), et
le piston (14 ; 14a) est déplacé de la position sortie vers la position rentrée avec l'extension de l'actionneur piézoélectrique (38 ; 38a) de la première longueur vers la seconde longueur.

10. Tête d'impression selon l'une des revendications 1 à 9, présentant en outre
un creuset (40) pouvant être chauffé au moyen d'un chauffage, au moyen duquel un réservoir de stockage (42) pour le métal liquide en fusion est formé,
dans laquelle
un trou de fond (46) est prévu dans une zone de fond (44) du creuset (40), dans lequel l'élément de buse est inséré ou par lequel le métal en fusion peut s'écouler dans le trou traversant d'élément de buse (20), et
l'actionneur est prévu sur le côté du creuset (40) opposé à la zone de fond (44) dans la direction d'actionnement (y).

11. Tête d'impression selon la revendication 10, présentant en outre
un boîtier de tête d'impression (36),
dans laquelle
le boîtier de tête d'impression (36) est formé d'un seul tenant avec le boîtier d'actionneur (30) ou le boîtier d'actionneur (30) est monté sur le boîtier de tête d'impression (36), et
le creuset (40) est monté directement ou via un composant isolant (50), qui fournit une isolation thermique, sur le boîtier de tête d'impression (36).

12. Tête d'impression selon la revendication 11, qui est réalisée de telle sorte que
le réservoir de stockage (42) du creuset (40) est en communication avec l'espace de chargement (24) lorsque le piston (14 ; 14a) se trouve dans la position rentrée, et
le piston (14 ; 14a) se trouvant dans la position rentrée pénètre dans le canal de piston et des fentes d'écoulement (48) sont prévues dans la paroi du trou traversant d'élément de buse (20) et/ou la paroi extérieure du piston (14 ; 14a), lesquelles permettent un afflux de métal en fusion dans l'espace de chargement (24) lorsque le piston (14 ; 14a) se trouve dans la position rentrée.

13. Procédé de fonctionnement d'une tête d'impression selon l'une des revendications 1 à 12, avec les étapes suivantes pour la génération et l'éjection d'une goutte de métal en fusion
remplissage de l'espace de chargement avec du métal en fusion par actionnement de l'actionneur pour déplacer le piston (14 ; 14a) à l'encontre de la force de précontrainte de l'élément de précontrainte (26 ; 26a) de la position sortie vers la position rentrée,
arrêt de l'actionnement de l'actionneur, et
génération et éjection de la goutte de métal en fusion par déplacement de retour du piston (14 ; 14a) dans la position sortie au moyen de la précontrainte de l'élément de précontrainte.

14. Procédé selon la revendication 13, dans lequel, pour la génération et l'éjection de plusieurs gouttes à la suite, après déplacement de retour du piston (14 ; 14a) dans la position sortie, l'étape supplémentaire
attente d'un temps de décroissance prédéterminé avant le nouveau remplissage de l'espace de chargement avec du métal en fusion par actionnement de l'actionneur a lieu.

15. Procédé selon la revendication 13 ou 14, dans lequel l'étape du remplissage par déplacement du piston (14 ; 14a) de la position sortie vers la position rentrée prend entre 60 % et 90 % d'un temps de mouvement total dont le piston a besoin pour le mouvement de la position sortie vers la position rentrée et de nouveau en retour vers la position sortie, et/ou
le piston (14 ; 14a) ne s'arrête pas dans la position rentrée.
